# EUROPEAN PATENT APPLICATION

(11) **EP 1 020 250 A2**
(43) Date of publication of application: **19.07.2000**
(21) Application number: 00300021.3
(22) Date of filing: 05.01.2000
(51) Int. Cl.: B23K 35/02

(54) **Metal-core weld wire**

(30) Priority: 08.01.1999 US 227242
(71) Applicant: ILLINOIS TOOL WORKS INC., Glenview, Illinois 60025-5811 (US)
(72) Inventor: Miszczak, Edward S., London, Ontario N5Z 3M9 (CA); Krilic-Andan, Milena, Woodstock, Ontario N4T 1H1 (CA)
(74) Representative: Rackham, Stephen Neil

(57) **Abstract**

A low carbon content metal-core weld wires for use in gas shielded welding operations have a low carbon steel sheath with a carbon content not more than approximately 0.008% C. A metal-core composition of the weld wire has little and preferably no fluxing agents, so that the weld deposit produced thereby has no more than occasional slag islands formed thereon. The metal-core composition may have carbon added thereto to improve the mechanical properties of weld deposit produced thereby, and the metal-core composition is between approximately 16% and approximately 20% of a total weight of the metal-core weld wire. Such a low carbon metal-core weld wire has a relatively low fume generation rate and produces weld deposits with excellent mechanical properties.

## Description

The invention relates generally to metal-core weld wires for gas shielded welding operations, and more particularly to ultra low carbon metal-core weld wires having reduced fume generation.

Metal-core weld wires for gas shielded arc welding are known generally and used widely, predominately in welding operations performed on generally horizontal or level surfaces, also typical of the use for solid weld wires, as opposed to out-of-position welding operations. One metal-core weld wire application, among others, is the manufacture of certain railway cars and components therefor wherein steel is welded in single or multi-pass welding operations. The steel in this exemplary application is typically a 70-80 ksi (483-552 MPa) rated carbon manganese steel approximately one half inch (12 mm) or so thick. Metal-core weld wires are also used for many other applications.

Metal-core weld wires are used increasingly in applications where solid weld wires were once used predominately. In comparison to solid wires, metal-core wires generally have greater deposition and faster travel speeds, improved arc and heat transfer, improved penetration and side wall fusion, reduced spatter and slag, and produce higher quality weld beads, thereby increasing productivity and reducing costs. The benefits of metal-core wires are attributable generally, and among other factors, to a higher current density concentrated in the sheath, and to a wider arc projection, which results in less weld pool turbulence, thus providing a better weld bead.

One known prior art metal-core weld wire for gas shielded arc welding comprises generally a low carbon steel sheath having between approximately 0.02% and 0.08% carbon. The prior art metal-core weld wire has a metal core composition comprising predominately iron powder and other generally non-fluxing metal compounds, for example aluminum, titanium and manganese, wherein the metal-core composition is approximately 18% of the total weight of the weld wire.

The mechanical properties of the weld deposit produced by metal-core weld wires depend generally on the composition thereof, for example the carbon content, which are controlled to produce mechanical properties that comply with a particular industry classification, for example that of the American Welding Society (AWS) and the Canadian Standards Association (CSA).

Despite the many benefits of metal-core weld wires discussed above, known prior art metal-core weld wires for gas shielded arc welding operations generally produce substantially more fumes in comparison to solid wires. The fumes originate generally in the form of vapors that form complex oxides in the arc. The increased fume generation characteristic of known prior art metal-core weld wires however potentially limits the more widespread use thereof, especially in operations performed indoors and in poorly ventilated welding environments. Fumes tend to reduce air quality and visibility, and have other disadvantages, which are undesirable.

The inventors of the present invention have recognized generally that carbon in metal-core weld wires is a significant source of fume generation, and that fume generation may be reduced substantially by reducing the carbon content in the steel sheath of the weld wire. The inventors have recognized also that relatively small amounts of carbon, or alloys thereof, or other compositions, may be introduced into the metal-core composition of the weld wire to compensate for any degradation in weld deposit mechanical properties resulting from a reduction in the carbon content of the weld wire steel sheath.

The inventors of the present invention have recognized more particularly that fume generation may be reduced generally by reducing the carbon content in the weld wire sheath, and that relatively small amounts of carbon and other compositions may be added to the metal-core composition to control the mechanical properties of the weld deposit without the attending fume generation otherwise occurring if the carbon originated from the steel sheath. Apparently carbon in the core composition of metal-core weld wires is transferred more efficiently into the weld deposit with relatively low fume generation in comparison to carbon transferred from the sheath.

In the field of flux-core weld wires, it is known generally to reduce fumes by reducing the carbon content in the steel sheath of the weld wire, as discussed in US-A-5,580,475. The prior art XL-71 flux-core weld wire, available from ITW Hobart Brothers, Woodstock, Ontario, for example, has a relatively low carbon sheath having not more than approximately 0.008% carbon therein, wherein the low carbon sheath is formed about a flux-core composition comprising predominately fluxing compounds, for example ferro-manganese silicon alloy, sodium titanate, silica, aluminum oxides and rutile, among other fluxing agents.

It is also known in the field of flux-core weld wires to add carbon to the flux-core composition to compensate for any degradation in weld deposit mechanical properties otherwise associated with the reduction of the carbon content in the steel sheath. In the prior art XL-71 flux-core weld wire, available from ITW Hobart Brothers, discussed above, carbon is added to the core composition in an amount between approximately 0.0048% C and approximately 0.0072% C to compensate for the relatively low carbon content in the sheath. The XL-71 flux-core weld wire with carbon added to the core complies with the AWS A5.20 Standard, E71T-1 classification, and produces a weld deposit that has among other properties a minimum yield strength of 58 ksi (400 MPa), a minimum tensile strength of 70 ksi (483 MPa), a minimum elongation of 22 %, and minimum impact value of 20 ft. lbs (0.84 N.m)

Flux-core weld wires are characterized generally and distinguished from metal-core weld wires by the inclusion of relatively large amounts of fluxing agents in the flux-core thereof in comparison to metal-core weld wires, which include few or no fluxing agents. Flux-core weld wires are also distinguished from metal-core and solid weld wires by relatively large amounts of slag produced on the weld deposits formed by flux-core weld wires. More particularly, flux-core weld wires tend to produce relatively continuous accumulations of slag on the weld deposit. In contrast, metal-core weld wires having substantially fewer, if any, fluxing agents generally produce at most only occasional slag islands along the weld deposit.

Flux-core weld wires are used predominately in gas shielded arc welding operations where the workpiece is heavily corroded, since the fluxing agents are good deoxidizers. Flux-core weld wires are also used in operations that require out-of-position welding, since the substantial amounts of slag produced thereby tend to hold or retain the weld deposit on the workpiece until the molten weld pool hardens. In many applications, however, the slag must be removed from the weld deposit, usually at a substantial cost, for example in applications where coatings are applied thereto. Flux-core weld wires generally produce substantially more fumes than metal-core and especially solid weld wires. The relatively large amounts of fumes and slag produced by flux-core weld wires generally limits the use of these wires to the particular applications discussed above. For these and other reasons, flux-core wires are generally not used interchangeably with solid and metal-core weld wires.

The present invention is drawn toward advancements in the art of metal-core weld wires for gas shielded welding operations.

The invention is drawn to a metal-core weld wire for gas shielded welding comprising generally a low carbon steel sheath having a carbon (C) content of not more than approximately 0.008% C and preferably between approximately 0.003% C and approximately 0.004% C, to substantially reduce fumes generated during welding. The ultra-low carbon steel sheath is formed, for example, from a continuous cast steel sheet, killed with restricted aluminum and batch carburized, although other ultra-low carbons steels may be used alternatively.

Reducing the carbon content of the steel sheath of the metal-core weld wire may generally lessen the mechanical properties of the resulting weld deposit produced thereby, including reduced toughness and reduced impact strength. In one embodiment, therefore, a mechanical property enhancing composition, preferably carbon, is reintroduced, or added, to the metal-core composition to generally increase the mechanical properties of the resulting weld deposit, as may be required to comply with a particular AWS or CSA electrode classification.

In one embodiment, the metal-core composition comprises between approximately 0.0020% C and approximately 0.0047% C, and the metal-core composition is between approximately 16% and approximately 20% of the total weight of the metal-core weld wire. In another embodiment, the metal-core composition comprises between approximately 0.0025% C and approximately 0.0046% C, and the metal-core composition is between approximately 17% and approximately 19% of the total weight of the metal-core weld wire. And in yet another embodiment, the metal-core composition comprises between approximately 0.0027% C and approximately 0.0042% C, and the metal-core composition is approximately 18% of the total weight of the metal-core weld wire.

In one exemplary embodiment, the total weight of the metal-core weld wire comprises between approximately 0.005% C and approximately 0.013% C. More particularly, the range of carbon in the sheath is between approximately 0.003% C and not more than approximately 0.008% C, and the range of carbon in the metal-core is between approximately 0.0019% C and not more than approximately 0.0047% C, whereby the total weight of the metal-core weld wire C content is the sum of the carbon in the core and the carbon in the sheath.

The total carbon content of the metal-core weld wire of the present invention is relatively low in comparison to other known metal-core and solid weld wires. The total carbon content of the metal-core weld wire of the present invention is also lower than known low carbon flux-core weld wires, for example the XL-71 flux-core weld wire, available from ITW Hobart Brothers. Yet the ultra low carbon metalcore weld wire of the present invention produces less fumes and unexpectedly produces weld deposits having similar or better mechanical properties than the known metal-core and solid weld wires as well as the XL-71 flux-core weld wire, as discussed below. In embodiments of the present invention where carbon is added to the metal-core composition to improve mechanical properties of the weld deposit produced thereby, the total amount of carbon in the weld wire is less than that required, to obtain the same properties, if all or most of the carbon originates from the steel sheath. Carbon is transferred more efficiently to the weld deposit from the metal-core composition than from the steel sheath, and thus the relatively small amounts of carbon added to the metal-core composition in the present invention do not appreciably increase the fume generation rate. In other words, it is more efficient to transfer carbon to the weld deposit from the core than from the sheath. Thus according to the invention, carbon in the sheath is minimized, and any carbon required to satisfy a particular mechanical property requirement is introduced into the weld deposit from the core of the weld wire, thereby minimizing the fume generation rate.

In other embodiments, other elements or compositions may be added to the metal-core composition to control the mechanical properties of the weld deposit, so long as the addition thereof does not substantially increase fume generation. The other property enhancing element or compositions may be used as an alternative to adding carbon to the core composition, or in addition thereto, so that the carbon content added to the core and hence the overall carbon content of the metal-core weld wire is reduced, thus further reducing fume generation while improving the mechanical properties of the weld deposit produced thereby.

The metal-core weld wire of the present invention also comprises preferably at least some manganese (Mn) and silicon (Si). The manganese is a deoxidizer, and tends to increase tensile strength of the weld deposit. The silicon is also a deoxidizer, and provides an improved wetting characteristic, thereby providing improved bead profile. In one embodiment, particularly suitable for welding in a 100% C0₂ shielding gas, the total weight of the metal-core weld wire comprises between approximately 4.0% Mn and approximately 4.5% Mn, and between approximately 2.2% Si and approximately 2.4% Si. These exemplary amounts of Mn and Si are not intended to be limiting, and the amounts thereof may be more or less depending on the particular welding operations. A shielding gas containing argon (Ar) or a mixture thereof with C0₂, for example, generally increases the efficiency of transfer of Mn and Si from the weld wire into the weld deposit. Thus where the shielding gas includes argon, the amounts of these elements, Mn and Si, in the metal-core weld wire may be correspondingly reduced in some proportion to the amount of argon added thereto.

In one embodiment, the steel sheath comprises not less than approximately 0.25% Mn and not more than approximately 0.50% Mn, and preferably the steel sheath comprises between approximately 0.35% Mn and approximately 0.45% Mn. The balance of Mn in the metal-core weld wire constituting the preferred Mn range discussed above originates from the metal-core composition as discussed below.

The steel sheath also comprises not more than approximately 0.040% Si, the balance of Si in the metal-core weld wire constituting the preferred Si range discussed above also originates from the metal-core composition as discussed below.

The steel sheath also comprises not more than approximately 0.005% N, and preferably approximately 0.004% N. The steel sheath also comprises not more than approximately 0,025% P, not more than approximately 0.015% S, and not more than approximately 0.025% Al. In a preferred embodiment, the sheath comprises approximately 0.370% Mn, approximately 0.005% P, approximately 0.009% S, approximately 0.007% Si, approximately 0.022% Al, and approximately 0.003% N.

The metal-core composition is between approximately 16% and approximately 20% of a total weight of the metal-core weld wire, and preferably between approximately 17% and approximately 19% of the total weight of the metalcore weld wire, and still more preferably approximately 18% of the total weight of the metal-core weld wire, but may be somewhat more or less so long as the carbon content of the sheath is not more than approximately 0.008%, and the total weight of the metal-core weld wire is between approximately 0.005% C and approximately 0.013% C in embodiments where the metal-core composition includes carbon.

In embodiments where carbon is added to the metal-core composition to improve the mechanical properties of weld deposits produced thereby, the carbon may be in the form of Fe-Mn, although carbon may be derived from other sources. The balance of the metal-core composition may be Fe powder and trace impurities, although the metal-core may include other compositional elements as discussed below.

In one embodiment the metal-core composition comprises between approximately 16% and approximately 20% of the total weight of the weld wire, and the metal-core composition comprises between approximately 1.23% Fe-Mn and approximately 1.56% Fe-Mn. In another embodiment, metal-core composition comprises between approximately 17% and approximately 19% of the total weight of the weld wire, and the metal-core composition comprises between approximately 1.46% Fe-Mn and approximately 1.62% Fe-Mn. The exemplary percentages of FeMn are based on the total weight of the metal-core composition.

Mn and Si may be added to the metal-core composition in the form of Fe-Si and Fe-Mn-Si, which are predominant sources of Mn and Si, although other sources may be used alternatively. In one embodiment, the metal-core composition comprises between approximately 2.40% Fe-Si and approximately 3.60% Fe-Si, and between approximately 10.86% Fe-Mn-Si and approximately 16.30% Fe-Mn-Si. In other embodiments it may be desirable to add titanium to the metal-core composition as a deoxidizer. In one embodiment, the metal-core composition comprises between approximately 0.44% Fe-Ti and approximately 0.66% Fe-Ti. These percentages of are based 6n the total weight of the metal-core composition. The Fe-Si, Fe-Mn-Si and Fe-Ti may be used alone, or in various combinations with each other, or in various combinations with Fe-Mn, as required by a particular application. The balance of the metal-core composition is Fe powder and trace impurities.

In one preferred embodiment, metal-core composition comprises between approximately 17% and approximately 19% of the total weight of the weld wire, and between approximately 1.46% Fe-Mn and approximately 1.62% Fe-Mn, between approximately 2.85% Fe-Si and approximately 3.15% Fe-Si, between approximately 12.90% Fe-Mn-Si and approximately 14.26% Fe-Mn-Si, between approximately 0.52% Fe-Ti and approximately 0.58% Fe-Ti, and the balance Fe powder and trace impurities.

There are preferably little or no fluxing agents in the metal-core composition, so that the weld deposit produced by the metal-core weld wire has no more than occasional slag islands formed thereon in comparison to the relatively continuous slag formations typical of flux-core weld wires.

In one exemplary embodiment, the metal-core weld wire of the present invention comprises an ultra-low carbon steel sheath and a metal-core composition, which is between approximately 17% and approximately 19% of the total weight of the weld wire.

The steel sheath comprises not more than approximately 0.008% C, between approximately 0.25% Mn and approximately 0.50% Mn, not more than approximately 0.025% P, not more than approximately 0.015% S, not more than approximately 0.040% Si, not more than approximately 0.025% Al, and between approximately 0.004 and approximately 0.005% N, wherein the percentages of the sheath composition are based on the total weight of the sheath.

The metal-core composition of the exemplary metal-core weld wire comprises between approximately 1.46% Fe-Mn and approximately 1.62% Fe-Mn, between approximately 2.85% Fe-Si and approximately 3.15% Fe-Si, between approximately 12.90% Fe-Mn-Si and approximately 14.26% Fe-Mn-Si, between approximately 0.52% Fe-Ti and approximately 0.58% Fe-Ti, and the balance Fe powder and trace impurities.

According to this exemplary metal-core weld wire composition, the carbon content of the metal-core composition is between approximately 0.0025% C and approximately 0.0046% C based on the total weight of the weld wire. The range of carbon in the metal-core composition is calculated based on the Fe-Mn having a carbon content in a range between approximately 1.0% C and approximately 1.5% C and the metal-core weld wire having a metal-core composition that is between approximately 17% and 18% of the total weight of the weld wire.

Fume generation rate data for a 1.2 mm diameter metal-core weld wire having the same composition as in the EXAMPLE above is disclosed in the "Fume Data Table" below for various different shielding gas mixtures. The metal-core weld wire complies with the Canadian Standards Association (CSA) W48.5 standard, E4801C-6-CH classification, which is equivalent to the AWS A5.18 standard, E70C-6 classification.

To generate the data, the welding operations were performed under the following conditions: 28 volts; 300 amps; travel speed 14 inches per minute (ipm) (350 mm/min); and wire feed speed 497 ipm (11 m/min)

The fume generation rate data (FGR) in the "Fume Data Table" were determined pursuant to AWS F1.2, "Laboratory Method for Measuring Fume Generation rates and Total Fume Emission of Welding and Allied Processes". Thus the fume generation rates below are approximate in compliance with AWS F1.2.

| Fume Data Table | |
|---|---|
| Shielding Gas | FGR (gr./min) |
| 100% C0₂ | 0.26 |
| 75% Ar and 25% CO₂ | 0.38 |
| 82% Ar and 18% C0₂ | 0.34 |
| 92% Ar and 68% C0₂ | 0.32 |

The Weld Deposit Chemistry Table I below is for a weld deposit chemistry produced by a 1.6 mm diameter metal-core weld wire having the same composition as in the EXAMPLE above in a 100% C0₂ shielding gas. The metal-core weld wire complies with the Canadian Standards Association (CSA) W48.5 standard E4801C-6-CH classification, which is equivalent to the AWS A5.18 standard, E7OC-6 classification.

| Weld Deposit Chemistry Table I | | |
|---|---|---|
| | WELD DEPOSIT | AWS E70C-6 |
| Yield Strength | 69,900 psi (482.3 MPa) | 58,000 psi(min.)(400 MPa) |
| Tensile Strength | 81,200 psi (560.3 MPa) | 70,000 psi(min.)(483 MPa) |
| Elongation | 30% | 22% |
| Impact (CVNs) | 39 ft. lbs (1.64 N.m) | 20 ft. lbs. (0.84 N.m) |
| C | 0.026% | 0.12% (max.) |
| Mn | 1.48% | 1.75% (max.) |
| P | < 0.01% | 0.03% (max.) |
| S | 0.01% | 0.03% (max.) |
| Si | 0.75% | 0.90% (max.) |
| Cu | 0.04% | 0.50% (max.) |

The weld deposit also includes trace elements, for example, Cr, Ni, Mo, V and other inevitable trace impurities in compliance with the AWS E7OC-6 classification. The additional carbon in the weld deposit is derived from C0₂ in the shielding gas.

The Weld Deposit Chemistry Table II below is for a weld deposit chemistry produced by a 1.6 mm diameter metal-core weld wire having the same composition as in the EXAMPLE above in a 92% Ar and 8% C0₂ shielding gas mixture. The metal-core weld wire complies with the Canadian Standards Association (CSA) W48.5 standard, E4801C-6-CH classification, which is equivalent to the AWSI A5.18 standard, E7OC-6 classification.

| Weld Deposit Chemistry Table II | | |
|---|---|---|
| | WELD DEPOSIT | AWS E70C-6 |
| Yield Strength | 71,100 psi (490.6 MPa) | 58,000 psi(min.)(400 MPa) |
| Tensile Strength | 83,400 psi (575.5 MPa) | 70,000 psi (min.)(483 MPa) |
| Elongation | 30% | 22% |
| Impact (CVNs) | 29 ft. lbs. (1.22 N.m) | 20 ft. lbs. (0.84 N.m) |
| C | 0.020% | 0.12% (max.) |
| Mn | 1.69% | 1.75% (max.) |
| P | < 0.01% | 0.03% (max.) |
| S | 0.01% | 0.03% (max.) |
| Si | 0.85% | 0.90% (max.) |
| Cu | 0.04% | 0.50% (max.) |

The weld deposit also includes trace elements, for example, Cr, Ni, Mo, V and other inevitable trace impurities in compliance with the AWS E7OC-6 classification. The additional carbon in the weld deposit is derived apparently from the C0₂ shielding gas.

The mechanical properties of weld deposits produced by the exemplary metal-core weld wire of the present invention are the same as or better than the mechanical properties of weld deposits produced by known prior art metal-core and solid weld wires. Yet the weld wires of the present invention have substantially less carbon and produce substantially fewer fumes than do the known prior art metal-core and solid weld wires.

The mechanical properties of the weld deposits produced by the exemplary metal-core weld wire of the present invention are also the same as or better than the mechanical properties of weld deposits produced by known low carbon fluxcore weld wires, yet the weld wires of the present invention have substantially less carbon than low carbon flux-core weld wires. Compare, for example, the mechanical properties in Tables I and II above with the mechanical properties of the XL-71 low carbon flux-core weld wire produced by ITW Hobart Brothers, having a minimum of 0.0048% C in the flux-core composition and not more than 0.008% C in the steel sheath thereof, which produces a weld deposit having a minimum yield strength of 58 ksi (400 MPa), a minimum tensile strength of 70 ksi (483 MPa), a minimum elongation of 22%, and minimum impact value of 20 ft. lbs (0.84 N.m). This result is unexpected, since the relatively low carbon content between approximately 0.0025% C and approximately 0.0046% C, based on the total weight of the weld wire, in the metal-core composition of the present invention suggests that the mechanical properties of the resulting weld deposit produced thereby should be less than the mechanical properties of weld deposits produced by a low carbon flux-core weld wire having a relatively large amount of carbon added to tile flux-core composition thereof. The metal-core weld wires of the present invention also produce substantially fewer fumes than are produced by the low carbon flux-core weld wires.

## Claims

1. A metal-core weld wire for gas shielded welding, comprising: a low carbon steel sheath having a carbon content of not more than approximately 0.008% C; and a metal-core composition that is between approximately 16% and approximately 20% of a total weight of the metal-core weld wire, whereby the metal-core weld wire has a relatively reduced fume generation rate.

2. A metal-core weld wire according to Claim 1, in which the steel sheath has a carbon content of between approximately 0.003% and approximately 0.004% and/or in which the steel sheath has a manganese content of between approximately 0.35% and approximately 0.45%.

3. A metal-core weld wire according to Claim 1, in which the steel sheath comprises between approximately 0.250% Mn and approximately 0.500% Mn, not more than approximately 0.025% P, not more than approximately 0.015% S, not more than approximately 0.040% Si, not more than approximately 0.025% Al, and not more than approximately 0.005% N, and preferably comprises approximately 0.370% Mn, approximately 0.005% P, approximately 0.009% S, approximately 0.007% Si, approximately 0.022% Al, and approximately 0.003% N.

4. A metal-core weld wire according to any one of the preceding claims, in which the carbon content expressed as a percentage of the total weight comprises between approximately 0.005% and approximately 0.13% and/or in which the manganese and silicon content expressed as a percentage of the total weight comprises between approximately 4.0% Mn and approximately 4.5% Mn, and between approximately 2.2% Si and approximately 2.4% Si.

5. A metal-core weld wire according to Claim 1, in which the metal-core composition comprises between approximately 0.0020% C and approximately 0.0047% C, or in which the metal-core composition comprises between approximately 1.23% Fe-Mn and approximately 1.56% Fe-Mn, or in which the metal-core composition comprises between approximately 2.40% Fe-Si and approximately 3.60% Fe-Si, between approximately 10.86% Fe-Mn-Si and approximately 16.30% Fe-Mn-Si, between approximately 0.44% Fe-Ti and approximately 0.66% Fe-Ti, and the balance Fe powder.

6. A metal-core weld wire according to Claim 1, in which the metal-core composition is between approximately 17% and approximately 19% of the total weight of the metal-core weld wire, and in which the metal-core composition comprises between approximately 0.0025% C and approximately 0.0046% C or in which the metal-core composition comprises approximately 18% of a total weight of the metal-core weld wire, and the metal-core composition comprises approximately 3.00% Fe-Si, approximately 13.58% Fe-Mn-Si, approximately 0.55% Fe-Ti, approximately 1.54% Fe-Mn, and the balance Fe powder.

7. A metal-core weld wire according to Claim 1, in which the metal-core composition comprises between approximately 17% and approximately 19% of a total weight of the metal-core weld wire, and in which the metal-core composition comprises between approximately 1.46% Fe-Mn and approximately 1.62% Fe-Mn and comprises between approximately 2.85% Fe-Si and approximately 3.15% Fe-Si, between approximately 12.90% Fe-Mn-Si and approximately 14.26% Fe-Mn-Si, between approximately 0.52% Fe-Ti and approximately 0.58% Fe-Ti, and the balance Fe powder, and/or in which steel sheath comprises between approximately 0.250% Mn and approximately 0.500% Mn, not more than approximately 0.025% P, not more than approximately 0.015% S, not more than approximately 0.040% Si, not more than approximately 0.025% AI, and not more than approximately 0.005% N, and/or in which the total weight of carbon expressed as a percentage of weight of the weld wire comprises between approximately 0.0025% and approximately 0.0046%.

8. A metal-core weld wire according to any one of the preceding claims, which has a fume generation rate of approximately 0.26 gm./min. when welding with a 100% CO₂ shielding gas, or a fume generation rate of approximately 0.38 gm./min. when welding with a 75% Ar and 25% CO₂ shielding gas mixture, or a fume generation rate of approximately 0.34 gm./min. when welding with an 82% Ar and 18% CO₂ shielding gas mixture or a fume generation rate of approximately 0.32 gm./min. when welding with a 92% Ar and 8% CO₂ shielding gas mixture.
